# EUROPEAN PATENT APPLICATION

(11) **EP 4 573 876 A1**
(43) Date of publication of application: **25.06.2025**
(21) Application number: 24221465.8
(22) Date of filing: 19.12.2024
(51) Int. Cl.: A01D 41/127, A01D 45/02, A01D 61/00

(54) **CORN HEADER WITH ENHANCED YIELD MAPPING RESOLUTION**

(30) Priority: 22.12.2023 US 202318394030
(71) Applicant: CNH Industrial Belgium N.V., 8210 Zedelgem (BE); CNH Industrial America LLC, New Holland, PA 17557 (US)
(72) Inventor: Linde, Karl R., New Holland, 17557 (US); Martin, Jethro, New Holland, 17557 (US); Missotten, Bart M.A., 8210 Zedelgem (BE); Jongmans, Dré W.J., 8210 Zedelgem (BE)
(74) Representative: CNH Industrial IP Department

(57) **Abstract**

A yield system for a corn header includes an auger detection subsystem. The auger detection subsystem includes sources and sensors disposed on row units. The sources and sensors include radar sources on the rear of the row unit and configured to interact with the agricultural product being conveyed through the row unit into the auger, laser sources coupled to the auger and configured to project the laser along the auger to interact with the agricultural product, or radar sensors disposed proximate to the deck plates of the row unit and configured to output a signal indicative of one-dimensional distance data. The sources and sensors include a distance sensor coupled to the auger and configured to output a signal indicative of distances. A control system
receives the signal from each radar sensor, from the distance sensor, or a combination thereof, and determines a relative yield of agricultural product at each row unit.

## Description

### BACKGROUND

The present disclosure relates generally to a corn header with enhanced yield mapping resolution.

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

An agricultural system is used to harvest agricultural product, such as barley, beans, beets, carrots, corn, cotton, flax, oats, potatoes, rye, soybeans, wheat, or other plant crops. Corn is an agricultural product commonly harvested via agricultural systems. A combine (e.g., combine harvester) is a type of harvester generally used to harvest corn. The combine may include or be coupled to a corn header, which may be configured to efficiently harvest certain types of agricultural products. For example, a corn header may be configured to efficiently harvest corn. For example, the corn header may include row units that include components that operate to separate ears of corn from stalks as the harvester travels through a field.

### BRIEF DESCRIPTION

This summary is provided to introduce a selection of concepts that are further described below in the detailed description. This summary is not intended to identify key or essential features of the claimed subject matter, nor is it intended to be used as an aid in limiting the scope of the claimed subject matter.

In certain embodiments, a yield system for a corn header includes a terahertz detection subsystem. The terahertz detection subsystem includes a plurality of terahertz sources configured to be disposed on a respective plurality of row units of the corn header, a plurality of terahertz cameras configured to be disposed on the respective plurality of row units of the corn header, and a control system. The control system includes a memory configured to store instructions and one or more processors. The control system receives the signal from each terahertz camera of the plurality of terahertz and determines a size and a density of the agricultural product at each row unit of the plurality of row units based on the respective image. The control system also determines a relative yield of the agricultural product at each row unit of the plurality of row units.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a side view of an embodiment of an agricultural system, in accordance with an aspect of the present disclosure;
FIG. 2 is a block diagram of an embodiment of a yield system that may be employed within the agricultural system of FIG. 1, in accordance with an aspect of the present disclosure;
FIG. 3 is a perspective front view of an embodiment of a portion of a corn header that may be employed within the agricultural system of FIG. 1, in accordance with an aspect of the present disclosure;
FIG. 4 is a top view of an embodiment of a pair of deck plates that may be employed within the agricultural system of FIG. 1, in accordance with an aspect of the present disclosure;
FIG. 5 is an embodiment of a graph of measurements received by a piezoelectric sensor of a row unit detection subsystem, in accordance with an aspect of the present disclosure;
FIG. 6 is a perspective view of a portion of the corn header of FIG. 3, in accordance with an aspect of the present disclosure;
FIG. 7 is a perspective view of the corn header of FIG. 3, in accordance with an aspect of the present disclosure;
FIG. 8 is an embodiment of a graph of measurements received by a distance sensor, in accordance with an aspect of the present disclosure; and
FIG. 9 is a perspective view of the corn header of FIG. 3, in accordance with an aspect of the present disclosure.

### DETAILED DESCRIPTION

The process of farming includes planting seeds in a field that become harvestable crops. An agricultural system engages the harvestable crops and separates portions into agricultural product (e.g., ears of corn) and other agricultural materials (e.g., stalks, leaves, and any unwanted and biodegradable byproduct) as the agricultural system (e.g., harvester, combine) travels across the field. The agricultural system includes a corn header having one or more row units, and each row unit is operated to separate the agricultural product from the plants. The corn header of the agricultural system may have multiple row units (e.g., 8, 12, 18, 24) that allow for simultaneous harvesting of a number of rows of the agricultural product per pass through the agricultural field. Portions of the field may have a crop yield that differs from other portions of the field due to various conditions during development of the agricultural products. A yield map outlining the crop yield of the agricultural products in various regions of the field provides information that may inform subsequent processes (e.g., management practices, fertilization, crop rotation, seed selection, etc.). As such, the yield map may include information to enhance crop production and accurately track field production. In certain cases, an average yield of the agricultural products collected across the corn header is provided. The average yield evaluated across the corn header may not provide suitable resolution of the crop yield within different areas of the agricultural field, e.g., as the number of row units of the corn header increases (e.g., 12, 18, 24).

Accordingly, as disclosed herein, a yield map that includes enhanced resolution (e.g., individual row unit yield, multiple adjacent row unit yield, row unit to row unit resolution) may be established to determine variance of the crop yield throughout the field. It should be noted, that enhanced resolution may be referred to herein as row-to-row resolution. As such, embodiments of the present disclosure relate generally to a yield system that captures resolution of the crop yield on a row-to-row basis. The yield system may include one or more sets of sensors (e.g., radar sensors, terahertz sensors, distance sensors, motion sensors, vibration sensors, impact sensors, cameras, and the like) positioned on the row units of the corn header and/or proximate to the row units (e.g., on or proximate to a component of the corn header). The one or more sets of sensors may be configured to generate signals (e.g., data) indicative of crop yield. For example, the yield system may include a control system communicatively coupled to a terahertz detection subsystem, a row unit detection subsystem, an auger detection subsystem, or a combination thereof, to provide the control system with signals that may be used to determine a row-to-row crop yield resolution.

For example, the terahertz detection subsystem includes a terahertz source and a terahertz camera disposed on one or more row units of the corn header. A controller of the control system receives an image from the terahertz detection subsystem. The image provides information of a presence of the agricultural product within a detection area. The detection area is positioned at the row unit supporting the terahertz source and the terahertz camera. The control system of the yield system determines a relative yield of the row unit based on the image. In some embodiments, the relative yield is determined based on the image and one or more additional parameters provided to the control system. The additional parameters may include a moisture level (e.g., moisture level of the corn), a harvested area (e.g., global positioning system data), a density of the agricultural product (e.g. density of the corn), operational speed(s) (e.g., ground speed, corn header speed), an average density of the agricultural product, a volume of agricultural product, mass flow of the agricultural product (e.g., average crop yield across the corn header), or a combination thereof.

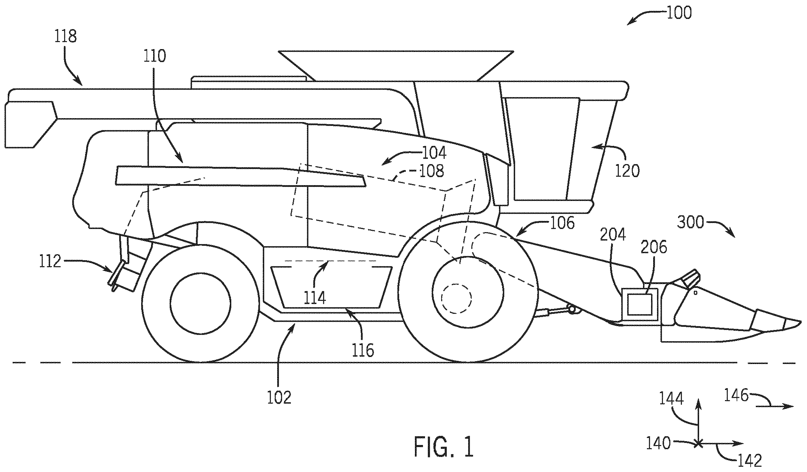

With the foregoing in mind, FIG. 1 is a side view of an embodiment of an agricultural system 100 (e.g. harvester). The agricultural system 100 includes a chassis 102 configured to support a corn header 300 and an agricultural crop processing system 104. As described in greater detail below, the corn header 300 is configured to harvest agricultural product and transport the agricultural product toward an inlet 106 of the agricultural crop processing system 104 for further processing of the agricultural product. The agricultural crop processing system 104 receives the agricultural product from the corn header 300 and separates desired crop material from crop residue. For example, the agricultural crop processing system 104 may include a thresher 108 having a cylindrical threshing rotor that transports the agricultural product in a helical flow path through the agricultural system 100. In addition to transporting the agricultural product, the thresher 108 may separate certain desired crop material (e.g., corn kernels) from the crop residue, such as husks and cobs, and may enable the desired crop material to flow into a cleaning system 114 (such as sieves) located beneath the thresher 108.

In some embodiments, the cleaning system 114 may remove debris from the desired crop material and enable the desired crop material to move to a storage tank 116 within the agricultural system 100. When the storage tank 116 is full, a tractor with a trailer may be positioned alongside the agricultural system 100. The desired crop material collected in the storage tank 116 may be carried up by an elevator and expelled out of an unloader 118 into the trailer. The crop residue may be transported from the thresher 108 to a crop residue handling system 110, which may process (e.g., chop/shred) and remove the crop residue from the agricultural system 100 via a crop residue spreading system 112 positioned at an aft end of the agricultural system 100. The agricultural system 100 may also include a cabin 120. To facilitate discussion, the agricultural system 100 and/or its components (e.g., the corn header 300) may be described with reference to a lateral axis or direction 140, a longitudinal axis or direction 142, and a vertical axis or direction 144. The agricultural system 100 and/or its components (e.g., the corn header 300) may also be described with reference to a direction of travel 146.

In the illustrated embodiment, the agricultural system 100 includes a yield system 204 to determine a enhanced crop yield. The yield system 204 includes a control system 206 that receives signals from yield detection subsystems positioned on row unit(s) of the corn header 300 and/or proximate to the row unit(s) (e.g., on or proximate to a component of the corn header 300). The row-to-row crop yield determined by the yield system 204 may be provided to additional control systems (e.g., in the cabin 120 of the agricultural system 100) to provide real-time information relating to the crop yield with enhanced resolution.

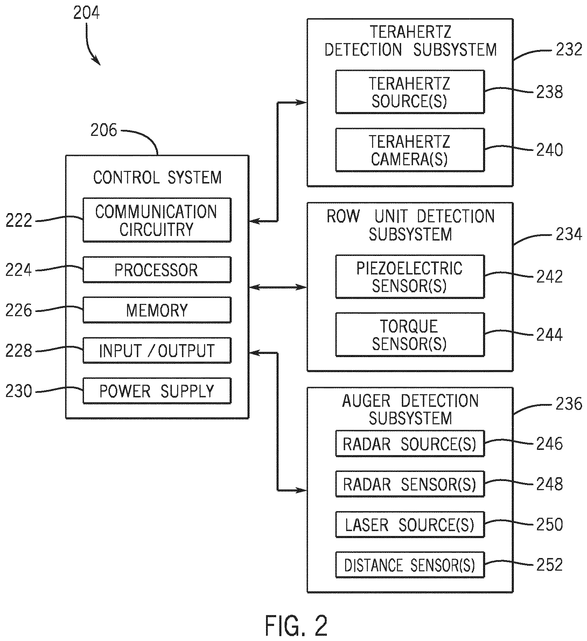

FIG. 2 is a block diagram of an embodiment of a yield system 204 that may be employed within the agricultural system of FIG. 1. The yield system 204 includes a control system 206. The control system 206 may include communication circuitry 222, a processor 224, a memory 226, an input/output (I/O) port 228, a power supply 230 (e.g., wired power, a battery), and the like. The yield system 204 includes subsystem(s) communicatively coupled to the control system 206 and configured to output signal(s) indicative of parameters that may be used to determine crop yields. The subsystem(s) may include a terahertz detection subsystem 232, a row unit detection subsystem 234, an auger detection subsystem 236, or a combination thereof.

The communication circuitry 222 may facilitate wired or wireless communication between various components of the control system 206 as well as with external devices, such as a mobile device, or central or local controllers of the agricultural system. The processor 224 may be any suitable type of computer processor or microprocessor capable of executing computer-executable code. Moreover, the processor 224 may include multiple microprocessors, one or more "general-purpose" microprocessors, one or more special-purpose microprocessors, and/or one or more application specific integrated circuits (ASICS), or some combination thereof. For example, the processor 224 may include one or more than one reduced instruction set (RISC) or complex instruction set (CISC) processors. In some embodiments, the processor 224 may receive inputs (e.g., signals) from the terahertz detection subsystem 232 (e.g., via the communication circuitry 222). For example, the terahertz detection subsystem may output signal(s) indicative of image(s) associated with collected agricultural product of certain row unit(s). As such, the control system 206 may receive communication (e.g., the signal(s)) associated with the row unit(s) from the terahertz detection subsystem 232 and determine a relative yield of each row unit to provide row-to-row yield resolution. In some instances, the control system 206 may control the terahertz detection subsystem 232 to generate the image(s) of harvested agricultural product.

The memory 226 of the control system 206 may also be used to store instructions, the data, various other software applications, and the like that are executed by the processor 224. The memory 226 may represent non-transitory computer-readable media (e.g., any suitable form of memory or storage) that may store the processor-executable code used by the processor 224 to perform various techniques described herein. The I/O ports 226 may be interfaces that may couple to other peripheral components such as input devices (e.g., keyboard, mouse), sensors, input/output (I/O) modules, and the like. The power supply 230 may provide power to one or more components of the control system 206. The components of the control system 206 may be coupled to the corn header, the row units, or any other suitable component(s) of the agricultural system.

In some embodiments, the yield system 204 provides the row-to-row crop yield to an operator of the agricultural system via a user interface. The control system 206 receives signals from yield detection subsystems positioned on row unit(s) of the corn header to display real-time information relating to the crop yield with enhanced resolution on the user interface. The user interface may display a row-to-row yield map (e.g., yield map) across the header. The control system 206 may control the user interface to present data indicative of the yield at each row unit. The row-to-row yield map may be produced by the control system 206 through analysis of sensor data from the terahertz detection subsystem 232, the row unit detection subsystem 234, the auger detection subsystem 236, or a combination thereof. In some instances, the control system 206 receives a signal indicative of a total yield from a yield monitor. The yield monitor may receive the sensor data from various sensor(s). In some instances, the sensor data is provided for each particular row unit, a series of row units, or any suitable amount of row units. For example, the control system may use a conversion factor (e.g., a constant value, a variable value, a function) to convert the sensor data into a measurable quantity (e.g., bushels per acre, tons per hectare, etc.) of the agricultural product. Further, the control system may determine a relative row-to-row yield based on a relative measurement of agricultural product at the row units. The control system may then display the row-to-row yield map based on the relative row-to-row yield and additional inputs. The operator may control operations (e.g., speed of gathering chain, height of header, speed of harvest) of the agricultural system based on the row-to-row crop yield map.

In some embodiments, the terahertz detection subsystem 232 includes terahertz source(s) 238 and terahertz camera(s) 240 (e.g., terahertz sensor(s), two-dimensional array(s) of sensors). The terahertz detection subsystem 232 may operate to collect non-contact measurements of the relative yield of the agricultural product. The terahertz source(s) 238 emits frequencies ranging from approximately 30 µm to 3 mm. Radiation from the terahertz source(s) 238 may be locally attenuated by a flow of corn ears entering the row unit. Attenuation of the terahertz source(s) 238 may be captured by the terahertz camera(s) 240 to generate an image. The image may include information about a volume of the flow of corn ears entering the row unit. As such, the control system 206 may receive signal(s) from the terahertz detection subsystem 232 indicative of each image, and the control system 206 may determine the relative yield corresponding to the row unit based on the image. Each row unit may include the terahertz source(s) and the terahertz camera(s) 240 of the terahertz detection subsystem 232 to monitor each row unit. It should be noted, that in some instances any number of row units (e.g., 2, 3, 4, 6) may include and/or be monitored by the terahertz detection subsystem 232. The control system 206 generates the row-to-row crop yield by combining the relative yield of each row unit of the corn header. In certain embodiments, a terahertz source 238 and a terahertz camera 240 may be contained in one device.

In certain embodiments, the row unit detection subsystem 234 includes piezoelectric sensor(s) 242 and/or torque sensor(s) 244. Components of the row unit detection subsystem 234 may be disposed on multiple row units of the corn header. It should be noted that in some instances the row unit detection subsystem 234 may include only the piezoelectric sensor(s) 242, only the torque sensor(s) 244, or a combination thereof. For example, the control system 206 receives a signal from each piezoelectric sensor 242 to facilitate determination of the relative yield of the row unit at which the piezoelectric sensor 242 is positioned. The signal received by the control system 206 from the piezoelectric sensor 242 may be indicative of an impact energy (e.g., pressure, voltage, kinetic energy). The impact energy may be analyzed by the control system 206 to determine a corn ear mass flow associated with the respective row unit. As such, the piezoelectric sensor(s) may be configured to acquire impact energy measurements that may be related to crop yield.

In some embodiments, each torque sensor 244 is configured to monitor torque on a respective drive shaft of the corn header. For example, each drive shaft may drive movement of a gathering chain disposed on a respective row unit of the corn header, and the torque sensor 244 may monitor a torque on the drive shaft, thereby monitoring the load on the gathering chain (e.g., due to the mass of corn ears transported by the gathering chain). The load on the gathering chain increases with an amount of corn ears harvested, and the torque on the drive shaft increases with the load on the gathering chain. As such, the control system 206 receives a signal indicative of the torque on each drive shaft, and the control system 206 analyzes the torque to determine the relative yield of the row unit. The control system 206 may receive multiple signals from various torque sensor(s) disposed at multiple row units, thereby producing the relative yield of the agricultural product harvested across the row units. As such, the row-to-row yield is determined by the control system 206 based on the signals from the torque sensors 244 as the agricultural system harvests the agricultural product.

In some embodiments, the auger detection subsystem 236 includes radar source(s) 246, radar sensor(s) 248, and/or laser source(s) 250 and distance sensor(s) 252. The radar source(s) 246 (e.g., frequency source(s), microwave source(s)) may be directed toward the deck plate of the row unit, so as to interact with the agricultural product being conveyed through the row unit into the auger. The radar sensor(s) 248 (e.g., antenna(s), receiver(s)) may be positioned proximate to the deck plate of the row unit, so as to monitor the agricultural product being conveyed through the row unit into the auger (e.g., one-dimensional radar sensor(s)). In some instances, the radar source(s) 246 and the radar sensor(s) 248 may be housed in one device disposed on a rear (e.g., auger side) of the row unit to monitor the relative yield of the agricultural product harvested.

For example, the control system 206 may be configured to receive data from the radar sensor(s) 248. Each of the row units that monitor (e.g., receive data) include the radar sensor(s) and the radar source(s). The control system 206 is communicatively coupled to the radar sensor(s) 248 and configured to receive data from the radar sensor(s) 248. In certain embodiments, the radar sensor(s) 248 are configured to output one-dimensional distance data to the control system 206. Each radar sensor 248 is configured to detect multiple targets along an axis emanating from the radar sensor 248 (e.g. region of detection) and to output the detection of the targets as one-dimensional distance data. The one-dimensional distance data represents the amount of reflected signal/energy (e.g. in response to the density of the targets intersected by the region of detection) for each distance along the axis emanating from the radar sensor. Based on the signal received from each radar sensor 248 corresponding to the amount of reflected signal/energy along the axis emanating from the radar sensor 248 (e.g. signal representing size/density of the corn ear(s)), the control system 206 (e.g. via the processor 224) is configured to determine the amount of corn (e.g., size/density of the corn ear(s)).

In certain embodiments, the laser source(s) 250 (e.g., continuous laser(s), pulsed laser(s), semi-continuous laser(s)) of the auger detection subsystem 236 projects the laser(s) along the auger to interact (e.g., via electromagnetic radiation) with the agricultural product conveyed by the auger. The distance sensor(s) 252 sense interaction of the laser(s) with the agricultural product and provides the control system 206 with trough fill data. For example, in some instances, the laser source(s) and/or the distance sensor(s) are coupled to the auger and rotate with the auger, thereby collecting auger fill data. The auger fill data includes measurements of distance(s) between the distance sensor(s) 252 and the agricultural product conveyed from each row unit into the auger. For example, the distance(s) may be determined based on timing of interactions of the laser(s) with the agricultural product. In this manner, the control system 206 generates a trough fill map based on the auger fill data, which may be used to determine the row-to-row yield of the corn header.

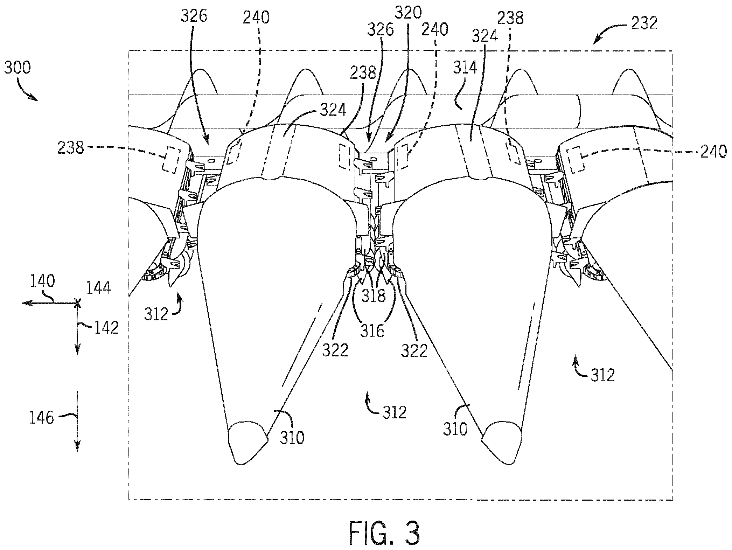

FIG. 3 is a perspective front view of an embodiment of a portion of a corn header 300 that may be employed within the agricultural system of FIG. 1. As illustrated, the terahertz detection subsystem 232 is coupled to the corn header 300. The terahertz detection subsystem includes multiple terahertz sources 238 and multiple terahertz cameras 240 and provides data that may be used to determine row-to-row yield information during operation. As shown, the corn header 300 includes multiple dividers 310 that direct the crops to row units 312 during operation. Each row unit 312 includes various components that operate to separate corn ears from the stalks, carry the corn ears toward a respective auger 314, and return the stalks to the field. The corn ears may be directed to one of a pair of augers 314 configured to convey the ears laterally inward to a conveyor at the center of the header. Further, each row unit 312 may include a pair of feed rollers 316 that are configured to grip the stalks and to drive the stalks toward the field (e.g., vertically downward; below the corn header 300) via rotation in opposite directions.

Further, each row unit 312 also includes a pair of deck plates 318 that are positioned over the pair of feed rollers 316. Each deck plate 318 extends along the longitudinal axis 142, and the pair of deck plates 318 are separated from one another along the lateral axis 140 to define a gap 320. In addition, each row unit 312 may include a pair of gathering chains 322 (e.g., with lugs) that are configured to drive or push the corn ears along the pair of deck plates 318 toward the auger. The pair of deck plates 318 are spaced apart so that the gap 320 is sized to enable the stalks to move through the gap 320, but to block the ears of corn from moving through the gap 320. In certain embodiments, the pair of deck plates 318 are adjustable and may be driven (e.g., via an actuator) toward and away from one another along the lateral axis 140 to change a size of the gap 320. A hood 324 is positioned rearward of each divider 310 and between adjacent row units 312 to cover various components, such as the actuator that drives the pair of deck plates 318, linkages, and so forth.

In some embodiments, a detection area 326 is positioned at the gap between the terahertz source(s) 238 and the terahertz camera(s) 240 of each row unit 312. The detection area 326 is positioned to enable the terahertz detection subsystem 232 to monitor the agricultural product at the row unit(s) 312 as the agricultural product is conveyed along the row unit(s) 312 to one of the pair of augers 314. Radiation from the terahertz source(s) 238 is attenuated due to a flow of corn ears along the row unit(s) 312. As such, the terahertz camera(s) 240 generates an image based on attenuation of the terahertz source(s) 238. The image is then received by the control system via signal(s) output by the terahertz detection subsystem, thereby enabling the control system to determine the relative yield of the row unit 312. The control system may analyze the image to determine a size/density of each corn ear, and the control system may determine a relative yield at each row unit 312 based on the size/density of each corn ear.

In this manner, the control system may determine the relative yields corresponding to the row units 312 of the corn header 300. As illustrated, one terahertz source 238 may be disposed on one hood 324 on a first side of the gap of a particular row unit 312, and a corresponding terahertz camera 240 may be disposed on an adjacent hood 324 on a second side of the gap. As such, the detection area 326 is formed between the hood 324 and the adjacent hood and above the pair of deck plates 318. In some embodiments, one terahertz source 238 and the corresponding terahertz camera 240 may be coupled to each row unit 312 to generate row-to-row resolution based on the respective images. Alternatively, in certain embodiments, the terahertz sources 238 and the terahertz cameras 240 of the terahertz detection subsystem 232 may be coupled to every other one of the row units 312, a number of the row units 312 (e.g., 4, 6, 8, 10), or any other suitable number of row units 312.

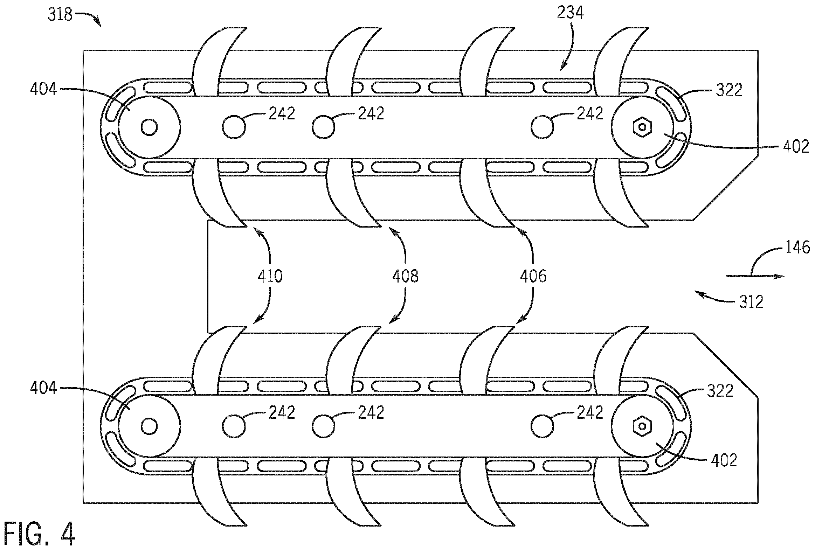

FIG. 4 is a top view of an embodiment of a pair of deck plates 318 that may be employed within the agricultural system of FIG. 1 (e.g., within a row unit 312 of FIG. 3). In the illustrated embodiment, the row unit detection subsystem 234 includes one or more piezoelectric sensors 242 positioned proximate to the pair of gathering chains 322, which are controlled by an idler sprocket 402 and a drive sprocket 404. The piezoelectric sensor(s) are configured to output signal(s) indicative of impact energy of the agricultural product (e.g., corn ear) impacting the pair of deck plates 318. The signal(s) indicative of the impact energy are received by the control system and analyzed to determine an agricultural product mass flow. The control system then uses the agricultural product mass flow to determine the relative yield of the row unit 312. While the row unit detection subsystem 234 is disclosed herein with respect to one row unit 312, in certain embodiments, the row unit detection subsystem 234 may be incorporated onto each row unit 312 of the header, a number of row units, any other suitable component of the corn header, and the like. As such, when the row unit detection subsystem 234 monitors multiple row units 312 the control system determines the relative yield for each row unit 312.

In some embodiments, the row unit detection subsystem 234 may include various sensing zones for each row unit. The sensing zones may include regions of the pair of deck plates 318 in which the piezoelectric sensors 242 are disposed. As shown, a first sensing zone 406 may be positioned to sense the impact energy of the agricultural product impacting the deck plates 318 proximate to the idler sprocket 402. A second sensing zone 408 may be positioned to sense the impact energy of the agricultural product impacting the deck plates 318 at the middle of the pair of gathering chains 322, between the idler sprocket 402 and the drive sprocket 404. Further, a third sensing zone 410 may be positioned to sense the agricultural product impacting the deck plates 318 proximate to the drive sprocket 404, which is positioned at a rear of the pair of deck plates 318 proximate to the auger of the corn header. In some embodiments, the control system may use the location of the impact energy (e.g., which sensing zone detects the greatest impact energy) to control operation of the corn header 300 (e.g., gathering chain speed, header height, etc.) In some instances, the row unit detection subsystem 234 may have one or more sensing zones for each row unit. It should be noted, that the row unit detection subsystem 234 may include any suitable type of impact sensor and the piezoelectric sensors 242 are a non-limiting example.

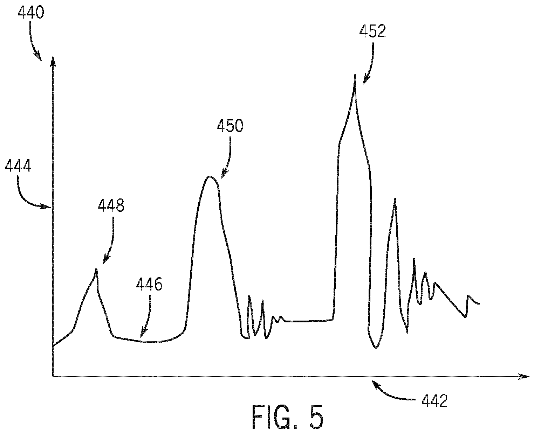

FIG. 5 is an embodiment of a graph 440 of measurements received by a piezoelectric sensor of the row unit detection subsystem of FIG. 4. The x-axis of the graph represents a time 442 of operation of the piezoelectric sensor (e.g. time in which the piezoelectric sensor is actively sensing, time the control system receives the signal). The y-axis 444 represents an impact energy of the agricultural product impacting the deck plates. The control system is configured to determine the mass of agricultural product (e.g., corn ear) impacting the deck plates based on the impact energy (e.g., which is determined based on feedback from the piezoelectric sensor(s) of the row unit detection subsystem), and the control system is configured to determine the relative yield of the row unit based on the mass of the agricultural product. The line 446 in the graph 440 represents the measurements by the piezoelectric sensor as various amounts of agricultural product impact the deck plates of the row unit. The peaks 448, 450, 452 in the graph 440 correspond to the agricultural product (e.g., respective corn ears) impacting the pair of deck plates within the sensing zone of the piezoelectric sensor. As shown, a first peak 448 on the graph 440 corresponds to detection of a first impact of low mass agricultural product (e.g., a small corn ear). A second peak 450 of greater magnitude relative to the first peak 448 on the graph 440 corresponds to detection of a second impact of medium mass agricultural product (e.g., a medium corn ear). The increased mass of agricultural product is indicative of a higher impact energy, as shown. Further, a third peak 452 with greater magnitude than the first peak 448 and the second peak 450 on the graph 440 corresponds to detection of a third impact of high mass agricultural product (e.g., a large corn ear). Accordingly, the graph 440 shows that relative yield is increasing with time.

With the foregoing in mind, the graph 440 of measurements of impact energy for one piezoelectric sensor of one row unit may be combined with graph(s) for other piezoelectric sensor(s) of other row unit(s) to produce a row-to-row yield map across the corn header. For example, the piezoelectric sensor(s) may output the signal(s) indicative of the impact energy to the control system. The control system may analyze the impact energy to determine the mass of agricultural product conveyed through each particular row unit. For example, the control system may use a conversion factor (e.g., a constant value, a variable value, a function) to convert the impact energy into the mass of agricultural product. Further, the control system may determine the relative row-to-row yield based on the relative mass of agricultural product at the row units. The control system may then generate a row-to-row yield map based on the relative row-to-row yield and additional inputs. The additional inputs may include positioning data of the agricultural system within the field (e.g., during measurements by the row unit detection subsystem) and the overall yield of the agricultural system (e.g., which may be determined based on feedback from a yield monitor). In some embodiments, a calibration (e.g., taring of sensors, ground speed calibration, calibration factor determination, and the like) may be used to generate the row-to-row yield map.

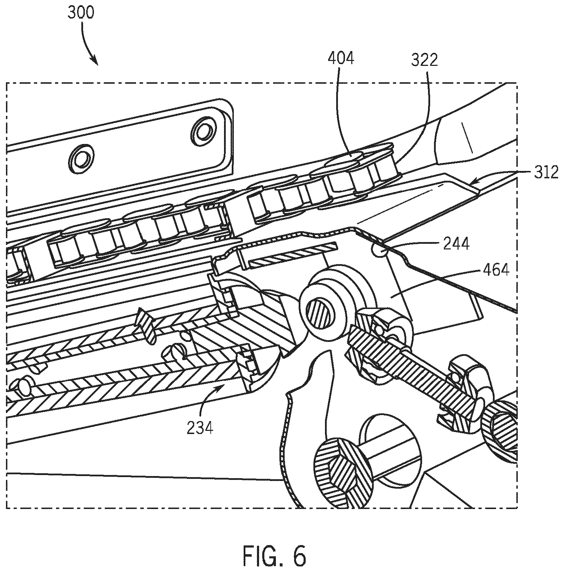

FIG. 6 is a perspective view of a portion of the corn header 300 of FIG. 3. In the illustrated embodiment, the row unit detection subsystem 234 includes a torque sensor 244 that is disposed proximate to a drive shaft 464 of the corn header 300. As the drive shaft 464 drives movement of the pair of gathering chains 322 disposed on the row unit 312 of the corn header, the torque sensor 244 outputs a signal indicative of a torque on the drive shaft 464, which is associated with a load on the pair of gathering chains 322 (e.g., due to the pair of gathering chains moving the agricultural product toward the auger). The signal indicative of the torque is received by the control system. The control system may determine the mass of the agricultural product based on the torque, and the control system may determine the relative yield of the respective row unit based on the mass of the agricultural product. While a single torque sensor 244 disposed on one row unit 312 is disclosed above, in certain embodiments, multiple torque sensors 244 may be disposed on multiple row units 312 to provide the control system with the signals of the torques corresponding to row units across the corn header, thereby enabling the control system to determine row-to-row yield.

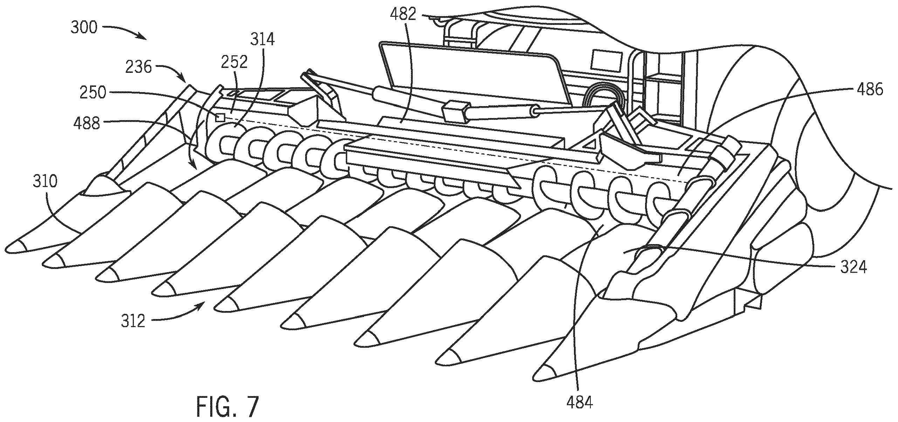

FIG. 7 is a perspective view of the corn header 300 of FIG. 3. In the illustrated embodiment, the corn header 300 includes the auger detection subsystem 236 having laser source(s) 250 and distance sensor(s) 252. In the illustrated embodiment, the corn header 300 includes the dividers 310 configured to separate rows of crops (e.g. corn). The row units 312 are configured to separate the agricultural product from residue and to direct the agricultural product to one of a pair of augers 314. The augers 314 are configured to convey the agricultural product (e.g., ears of corn) laterally inward to a conveyor 482 at the center of the corn header. The augers 314 extend along a substantial portion of the width of the corn header 300 (e.g., along the lateral axis 140). The augers 314 may be driven by a driving mechanism (e.g., electric motor, hydraulic motor, etc.). As the agricultural system is driven through the field, the dividers 310 direct the rows of crops into the row units 312. The row units engage the crops within the field, and the augers 314 transport the agricultural product to the conveyor 482, which directs the crops toward the inlet of the agricultural crop processing system.

In some embodiments, laser source(s) 250 (e.g., continuous laser(s), pulsed laser(s), semi-continuous laser(s)) of the auger detection subsystem 236 are positioned on the auger 314 to enable projection of the laser light(s) along the auger 314 perpendicular to the row units, thereby establishing laser path(s) 486. As shown, the laser source(s) 250 and the distance sensor(s) 252 rotate with the auger 314 in a direction of rotation 488. In the illustrated embodiment, the laser source(s) and the distance sensor(s) are part of one device, which is positioned on a first side of the auger. However, in certain embodiments, the laser source(s) may be positioned on the first side of the auger, and the distance sensor(s) may be positioned on a second side of the auger, opposite the first side. In yet other embodiments, the laser source(s) and the distance sensor(s) may be positioned on the first side of the auger, on the conveyor 482, or any suitable component of the corn header 300. In some instances the laser source(s) and/or the distance sensor(s) may be positioned on a first auger of the pair of augers and a respective distance sensor(s) and/or laser source(s) may be positioned on a second auger of the pairs of augers.

In certain embodiments, the laser light(s) emitted by the laser source(s) 250 interact with the agricultural product filling the trough 484 as the corn ears are directed through the augers 314 toward the conveyor 482. In this manner, as the agricultural product fills the trough 484, the laser light(s) produced by the laser source(s) 250 interact with the agricultural product. As such, the distance sensor(s) 252 monitor interaction of the laser light(s) and output signal(s) indicative of the interaction(s) to the control system. For example, each distance sensor(s) may monitor the laser light(s) reflected by the agricultural product from a respective laser source(s) 250. In this manner, the respective laser source(s) 250 may monitor the agricultural product harvested for a respective row unit 312 in which the laser source(s) is positioned. The control system, in turn, may determine trough fill data based on the feedback from the distance sensor(s), thereby enabling the control system to determine the row-to-row yield of the corn header 300.

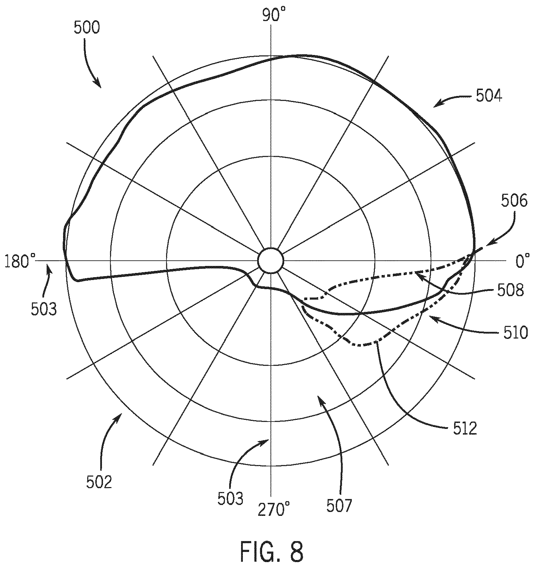

FIG. 8 is an embodiment of a graph 500 of measurements received by a distance sensor of FIG. 7. The graph 500 may be generated by the control system based on feedback from a respective distance sensor of the auger detection subsystem. The graph 500 includes a circumferential axis 502 that corresponds to angular position, and the graph 500 includes a radial axis 503 that corresponds to distance along the auger. The distance sensor outputs data as the distance sensor rotates in the direction of rotation of the auger, thereby establishing a first profile 504 of distance along the auger as a function of angular position. During operation a second profile 506 and a third profile 507 provides information of row-to-row yield based on sensed distances as the agricultural product enters the auger and the trough and interactions with the laser source(s) during harvesting.

In certain embodiments, the control system is configured to analyze the profile to determine the relative row-to-row yield of the corn header. For example, the control system may determine that a portion 508 of the second profile 506 indicates low yielding outer row units of the corn header. In addition, the control system may determine that a portion 510 of the first profile 504 indicates a substantially uniform yield distribution across the row units of the corn header. Furthermore, the control system may determine that a portion 512 of the third profile 507 indicates low yielding inner row units of the corn header. In this manner, the control system may determine the relative row-to-row yield based on feedback from the distance sensor(s) of the auger detection system.

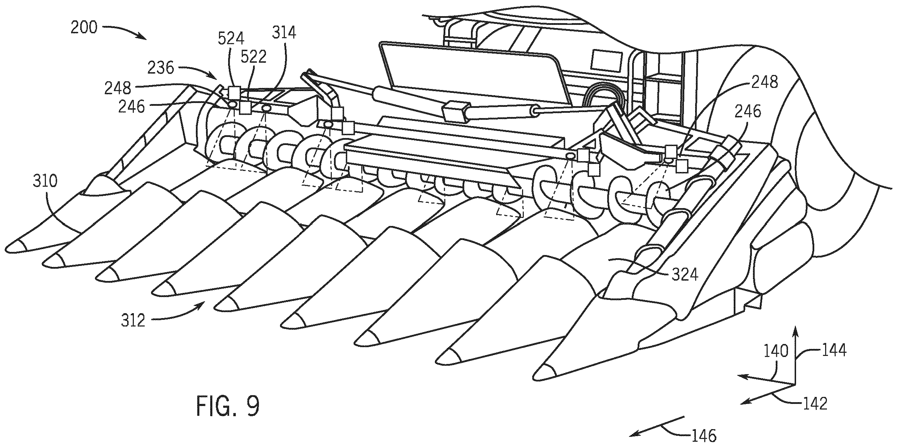

FIG. 9 is a perspective view of the corn header 300 of FIG. 3. In the illustrated embodiment, the corn header 300 includes the auger detection subsystem 236 having radar source(s) 246 and radar sensor(s) 248. At least one radar source 246 and the corresponding radar sensor 248 may be translatable via a respective sensor position actuator 522 and/or rotatable via a respective sensor orientation actuator 524. In the illustrated embodiment, each radar source 246 and the corresponding radar sensor 248 are included in one device and are coupled (e.g. mechanically) to a frame of the corn header 300 of the agricultural system. In certain embodiments, the radar source(s) 246 and/or the radar sensor(s) 248 may be additionally or alternatively coupled to the cabin of the agricultural system. In addition, in certain embodiments, at least one radar source 246 and the corresponding radar sensor 248 may be housed individually or separately.

In the illustrated embodiment, the radar source(s) 246 and the radar sensor(s) 248 are in fixed positions to facilitate illumination of agricultural product at the respective row unit(s) 312 and detection of respective one-dimensional data indicative of the amount of reflected radar energy. Each radar sensor outputs a respective signal indicative of the one-dimensional data, and the control system determines an amount of agricultural product at each row unit 312 based on the one-dimensional data. The control system then determines relative row-to-row yield based on the amount of agricultural product at each row unit. Alternatively, in certain embodiments, one radar source 246 and the corresponding radar sensor 248 may be translated via the sensor position actuator 522 across the corn header 300 during operation of the agricultural system to collect the one-dimensional data indicative of the amount of reflected radar energy for each row unit. The control system may determine the relative row-to-row yield based on the feedback from the one radar sensor.

In certain embodiments, the radar source(s) 246 and the radar sensor(s) 248 point in the direction of travel 146. In certain embodiments, at least one radar source 246 and the corresponding radar sensor 248 may be angled with respect to the longitudinal axis 142 of the agricultural system. In certain embodiments, the radar source(s) 246 and the radar sensor(s) 248 may be angled upwardly or downwardly with respect to the longitudinal axis 142. While the auger detection subsystem 236 includes eight radar sources 246 and radar sensors 248 in the illustrated embodiment, in other embodiments, the auger detection subsystem may include more or fewer radar sources/sensors (e.g., one for each row unit, one for every other row unit, etc.). While the auger detection subsystem 236 includes radar source(s)/sensor(s) in the illustrated embodiment, in certain embodiments, the auger detection subsystem may include additional source(s)/sensor(s) (e.g., alone or in combination with the radar source(s)/sensor(s)) to monitor the agricultural product at the row unit(s), such as Lidar source(s)/sensor(s), ultrasonic source(s)/sensor(s), camera(s), infrared source(s)/sensor(s), other suitable type(s) of source(s)/sensor(s), or a combination thereof. In some instances, the auger detection subsystem 236 may include sensor(s) and source(s) of the row unit detection subsystem of FIG. 3 and FIG. 4, the laser source(s) and distance sensor(s) of FIG.7, alone, or in combination.

## Claims

1. A yield system for a corn header (300), comprising:
an auger detection subsystem (236) comprising a plurality of sources and a plurality of sensors configured to be disposed on a plurality of row units (312), wherein the plurality of sources and the plurality of sensors comprises:
a plurality of radar sources (246), wherein each radar source (246) of the plurality of radar sources (246) is disposed on a rear of a respective row unit (312) of the plurality of row units (312), and the radar source (246) is configured to interact with an agricultural product being conveyed through the row unit (312) of the plurality of row units (312) into an auger (314);
a laser source (250), wherein the laser source (250) is coupled to an auger (314), and the laser source (250) is configured to project the laser along the auger (314) to interact with the agricultural product; or
a plurality of radar sensors (246), wherein each radar sensor of the plurality of radar sensors (246) is disposed proximate to a deck plate (318) of the row unit (312) of the plurality of row units (312), and the radar sensor (246) is configured to output a signal indicative of one-dimensional distance data;
a distance sensor (252), wherein the distance sensor (252) is coupled to the auger (314), and the distance sensor (252) is configured to output a signal indicative of distances; or
a combination thereof;
a control system (206) comprising:
a memory (226) configured to store instructions; and
one or more processors (224);
wherein the control system (206) is configured to:
receive the signal from each radar sensor (246) of the plurality of radar sensors (246), receive the signal from the distance sensor (252), or a combination thereof; and
determine a relative yield of agricultural product at each row unit (312) of the plurality of row units (312) based on the respective one-dimensional distance, distances, or a combination thereof.

2. The yield system of claim 1, wherein the control system (206) is configured to determine the yield at each row unit (312) of the plurality of row units (312) based on the relative yield at the row unit (312) and at least one additional parameter.

3. The yield system of claim 2, wherein the control system (206) is configured to generate a yield map based on the yield at each row unit (312) of the plurality of row units (312).

4. The yield system according to any of the claims 1 to 3, wherein the signal indicative of one-dimensional distance consists of an amount of reflected signal/energy emanating from the radar sensor (246) of the plurality of radar sensors (246).

5. The yield system according to any of the claims 1 to 3, wherein the signal indicative of distances is trough (484) fill data, wherein the trough (484) fill data consists of measurements of distances between the distance sensor (252) and the agricultural product conveyed from each row unit (312) of the plurality of row units (312) into the auger (314).
